# EUROPEAN PATENT APPLICATION

(11) **EP 2 034 671 A1**
(43) Date of publication of application: **11.03.2009**
(21) Application number: 07744430.5
(22) Date of filing: 30.05.2007
(51) Int. Cl.: H04L 12/56, H04M 3/00, H04Q 7/22

(54) **MOBILE TERMINAL AND COMMUNICATION METHOD**

(30) Priority: 31.05.2006 JP 2006150857
(71) Applicant: Softbank BB Corp., Tokyo 105-7304 (JP)
(72) Inventor: SETA, Naoya, Tokyo 105-7304 (JP); MIYAJIMA, Haruya, Tokyo 105-7304 (JP); HAYASHI, Hideki, Tokyo 105-7304 (JP); FUJII, Teruya, Tokyo 105-7304 (JP)
(74) Representative: Grünecker, Kinkeldey, Stockmair & Schwanhäusser Anwaltssozietät
(86) International application number: PCT/JP2007/061017
(87) International publication number: WO 2007/139161

(57) **Abstract**

A mobile terminal and communication method capable of increasing the communication continuity and maintaining the communication quality of real-time communications are provided.

The communication method according to the present invention is a method of communicating between a first mobile terminal 1a and a second mobile terminal 1b capable of wireless communication in a plurality of communication networks. First, information required to establish a communication session for performing communications is exchanged via the call control device 3 between the first mobile terminal 1a and the second mobile terminal 1b. Thereafter, a session to establish a communication session is established on the basis of the required information that has been exchanged. Communications are executed between the first mobile terminal 1a and the first mobile terminal 1b by means of the established communication session.

## Description

### TECHNICAL FIELD

The present invention relates to a mobile terminal and a communicationmethodand, more particularly, to a communication technology for maintaining a communicative state even in cases where the mobile terminal moves between access networks.

### BACKGROUND ART

In recent years, due to the development of wireless communication technology, in addition to representative communication media such as W-CDMA or other cellular networks, other communication media such as wireless LAN (Local Area Network) or PHS (Personal Handyphone System) networks, for example, have also been popularized. Hence, communication is made possible by freely selecting one of these communication systems in accordance with the radio wave conditions of the movement destination and the communication conditions required by the user.

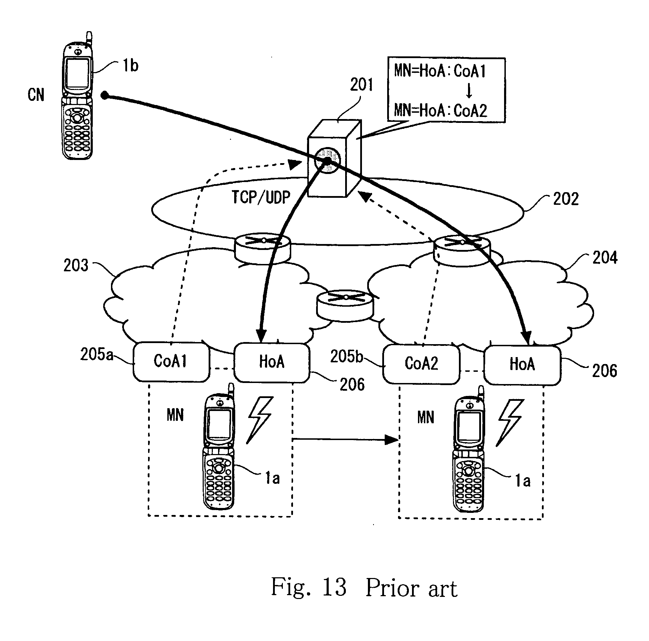

Fig. 13 is an explanatory diagram serving to illustrate a communication method which uses mobile IP. Fig. 13 shows a case where communication is performed between a mobile terminal 1a and a mobile terminal 1b. A correspondence relationship between a home address (HoA) 206 and a care-of address (CoA) 205 is registered with the home agent (HA) 201 which constitutes a center server provided on a communication network 202. The home address 206 is an address that is assigned to each mobile terminal and which does not change even with movement. The care-of address 205 is an address that is assigned to a communication medium (network card) which enables the mobile terminal to be utilized at the movement destination and which is changed as the mobile terminal moves.

As shown in Fig. 13, when the mobile terminal 1a moves from a communication network 203 to another communication network 204, the home address 206 for the mobile terminal 1a is unchanged in the home agent 201 but the care-of address 205 is changed from a care-of address 205a to a care-of address 205b. The data packets transmitted by the mobile terminal 1b are received by the home agent 201 and transferred from the home agent 201 to a foreign agent (not illustrated) and the foreign agent transmits the data packets to the mobile terminal 1a.

Thus, by associating and registering the unchanged home address 206 and the variable care-of address 205 in the home agent 201, the partner terminal communicating with the registered mobile terminal 1a is able to continue communications with the mobile terminal by referencing the care-of address 205 associated with the home address 206 in the home agent 201 wherever the mobile terminal moves.
Patent Document 1: JP 2006-80981 A
Patent Document 2: JP 2001-237869 A

### DISCLOSURE OF THE INVENTION

### Problem that the invention is intended to solve

A communication method by a mobile IP, by reason that the communication is always carried out via the home agent, has a redundancy in its paths and an excessive amount of transfer traffic between the home agent and the foreign agent, which is unnecessary in the direct communication between a mobile terminal and a communication partner. In addition, traffic between the home agent and a foreign agent has more amount of information than normal IP packets corresponding to an added IP header, because IP packets are transferred after being encapsulated. For this reason, there is a problem that packet loss and transmission delays occur. By necessity this problem causes a deterioration of the communication quality (QoS) and an obstacle in real-time communications required in case of an IP telephone or the like, for example.

Patent Document 2 discloses a technology of sending and receiving communication data during a communication interruption by using a proxy. However, this communication system executes position management in a mobile terminal, so that it differs from the communication system which the present invention aims at.

The present invention is conceived with the above situation as a background and an object of the present invention is to provide a mobile terminal and communication method that make it possible to enhance the continuity of communications and to maintain the communication quality of real-time communications.

### Means for solving the problem

The mobile terminal according to the present invention is a mobile terminal capable of wireless communication in a plurality of communication networks, comprising a controller for exchanging an information required to establish a communication session for performing communications with a communication partner; and communication means for establishing the communication session on the basis of the required information that have been exchanged, and executing communications with the communication partner through the established communication session, wherein the controller acquires the required information by executing call control with the communication partner via a call control device.

Here, the controller desirably establishes a local session with a communication application upon request of the communication application.

When performing a handover, the controller preferably executes information exchange and shifts to a new communication session.

In addition, the controller desirably transmits a signal indicating that data have been received normally from the communication partner to the communication partner.

Furthermore, the controller preferably transmits information for specifying data that have been transmitted normally to the communication partner when the communication session with the communication partner is disconnected.

In addition, the controller may judge the existence of normally transmitted data based on whether it has been possible to write data from a transmission buffer on the controller to a transmission buffer that is controlled to receive a signal indicating normal reception from the transmission destination and to delete data, and may discard the data from the transmission buffer on the controller in cases where judgment is made that there are normally transmitted data. In addition, the controller of the mobile terminal desirably exchanges information required to establish the communication session with the controller of the communication partner and executes communications by means of the established communication session.

The communication method of the present invention is a method of communicating between a first mobile terminal and a second mobile terminal capable of wireless communication in a plurality of communication networks, the method comprising an information exchange step of exchanging, via a call control device, an information required to establish a communication session for performing communications between the first mobile terminal and the second mobile terminal; a session establishment step of establishing the communication session on the basis of the required information that has been exchanged; and a communication execution step of executing communications, not through the call control device, between the first mobile terminal and the second mobile terminal by means of the established communication session.

Here, the information exchange step is desirably executed by the controller that establishes a local session with a communication application upon request of the communication application.

The information acquisition step is preferably executed when performing a handover.

Furthermore, the communication method may further comprise a step in which the first mobile terminal transmits to the second mobile terminal a signal indicating normal reception from the second mobile terminal and a step in which the second mobile terminal discards data of the transmission buffer in accordance with the signal indicating normal reception.

The communication method may further comprise a step in which the first mobile terminal transmits an information specifying data that have been received normally to the second mobile terminal when the communication session is disconnected; and a step in which the second mobile terminal discards data of the transmission buffer on the basis of information specifying the normally received data.

In addition, the communicationmethodmay further comprise a step of judging the existence of normally transmitted data based on whether it has been possible to write data from a transmission buffer on the controller to a transmission buffer that is controlled to receive a signal indicating normal reception from the transmission destination and to delete data, and of discarding the data from the transmission buffer on the controller in cases where judgment is made that there are normally transmitted data. Furthermore, the information exchange step, session establishment step, and communication execution step are desirably executed between the controller of the first mobile terminal and the controller of the second mobile terminal.

### Effect of the invention

The present invention is able to provide a mobile terminal and communication method that make it possible to enhance the continuity of connection-type communications and to maintain the communication quality of real-time communications.

### BRIEF DESCRIPTION OF THE DRAWINGS

Fig. 1 is a constitutional view of a wireless communication system to which the communication method of the present invention is applied;
Fig. 2 is a block diagram of the constitution of the mobile terminal of the present invention;
Fig. 3 is a block diagram of a specific software configuration of the mobile terminal of the present invention;
Fig. 4 is an explanatory diagram of a connection system for implementing the communication method of the present invention;
Fig. 5 is an explanatory diagram of a connection system for implementing the communication method of the present invention;
Fig. 6 shows a network connection configuration of the communication system of the present invention;
Fig. 7 shows a network connection configuration of the communication system of the present invention;
Fig. 8 is a sequence diagram of the communication method of the present invention;
Fig. 9 is a sequence diagram of the communication method of the present invention;
Fig. 10 is a sequence diagram of the communication method of the present invention;
Fig. 11 is a sequence diagram of the communication method of the present invention;
Fig. 12A is an explanatory diagram serving to illustrate the communication method of the present invention;
Fig. 12B is an explanatory diagram serving to illustrate the communication method of the present invention; and
Fig. 13 is an explanatory diagram serving to illustrate a prior communication method.

### Explanation of the reference symbols

- 1: mobile terminal
- 3: call control device
- 11: TCP application
- 12: UDP application
- 101: communication application processing unit
- 102: session mobility control unit
- 103: call control unit
- 104: interface selection control unit
- 105: communication interface group
- 131: session mobility controller

### BEST MODE FOR CARRYING OUT THE INVENTION

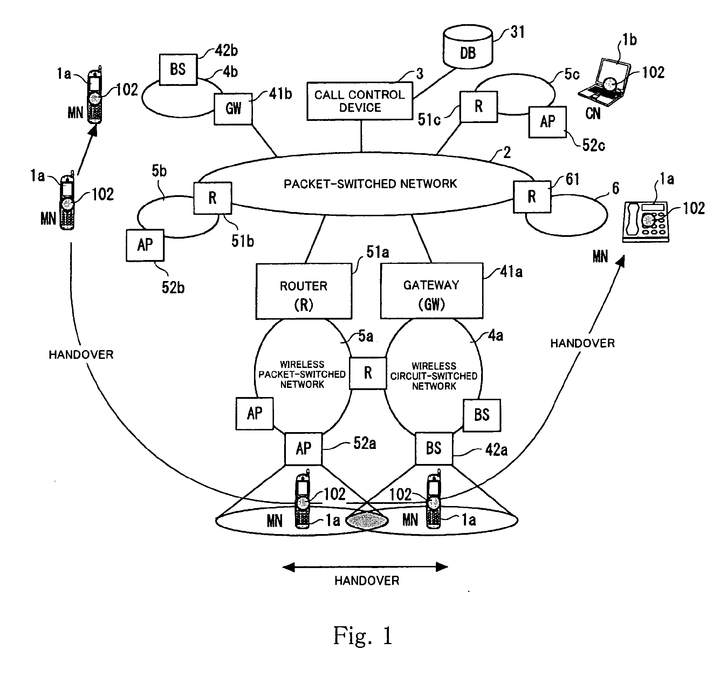

A constitution of a wireless communication system to which a communication method of the present invention is applied will be illustrated first by using Fig. 1.

As shown in Fig. 1, a call control device 3 is connected to a packet-switched network (IP network) 2 in the communication system. The packet-switched network 2 is a communication network constituting a core which performs voice or data communications by means of a packet-switched system. A call control device 3 is also known as a 'SIP server device' (SIP: Session Initiation Protocol) and executes call control such as a registration of a position of a mobile terminal. SIP is a protocol that performs signaling relating to a session such as an IP telephone or a video conference that is regulated by RFC 3261. A mounting of another protocol such as H.323 is also possible.

The call control device 3 comprises a network interface, a call control unit, a handover processing unit, a position registration processing unit, and a registration database 31, for example. The network interface comprises a physical network interface and a device driver which corresponds to the physical network interface, a dialup function or other network control function and a base protocol stack (TCP/UDP/IP or the like). The call control unit executes call out and call in process by sending and receiving a call control message to and from the mobile terminal 1a and transmitting the call control message to the mobile terminal 1b which is the call in destination. The handover processing unit performs a voice handover process between networks of different types such as a wireless line network and a packet-switched network. The position registration processing unit executes position registration of the user's mobile terminal 1. The registration database 31 stores position information and connection state-related information for each user.

In addition, wireless circuit-switched networks 4a and 4b, wireless packet-switched networks (wireless LAN) 5a, 5b, and 5c, and an IP telephone network 6 are connected to the packet-switched network 2. The wireless circuit-switched network 4a or the like is connected to the packet-switched network 2 via a gateway device 41a or the like and comprises a base station 42a capable of communicating with the mobile terminal 1. The wireless packet-switched network 5a or the like is connected to the packet-switched network 2 via a router 51a or the like and comprises an access point 52a or the like capable of communicating with the mobile terminal 1. The IP telephone network 6 is connected to the packet-switched network 2 via a router 61. Handover is executed when the mobile terminal 1 moves between each of the communication networks.

As shown in Fig. 1, by executing a communication method of the present invention, the mobile terminal 1 is able to move between communication networks seamlessly while continuing voice and data communications. The mobile terminal 1 of the present invention has a middleware program 102, which executes session mobility control (described subsequently), installed thereon.

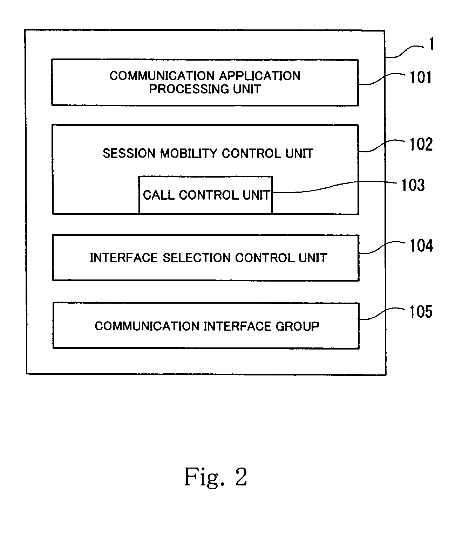

Fig. 2 is a block diagram showing a constitution of a mobile terminal of the present invention. As shown in Fig. 2, the mobile terminal 1 comprises a communication application processing unit 101, a session mobility control unit 102, a call control unit 103, an interface selection control unit 104, and a communication interface group 105.

The communication application processing unit 101 is a functional block that is executed by an application program for executing various communications such as a web browser or mail software.

The session mobility control unit 102 corresponds to a session mobility controller which is the characterizing constitution of the present invention. The session mobility control unit 102 executes the exchange of information required to establish a communication session via the call control device 3 in cases where communication is started or resumed between mobile terminals.

A communication process executed by the communication application processing unit 101 involves the session mobility control unit 102. The session mobility control unit 102 communicates with its communication partners. The communication application processing unit 101 performs a communication process with the session mobility control unit 102 by means of the same process as that involved in a communication with the communication partner.

The call control unit 103 is provided in the session mobility control unit 102 and executes a call control-related process with the call control device 3.

The interface selection control unit 104 executes a process to select an optional communication interface by means of a communication interface group 105 based on a user request, the communication costs, and the communication quality (electrical field strength) or the like.

The communication interface group 105 includes interfaces which correspond with various communication networks such as a CSR-IF (Circuit Switch Radio Interface), which is an interface for a wireless circuit-switched network 4, and a PSR-IF (Packet Switch Radio Interface), which is an interface for the wireless packet-switched network 5, or the like, for example. The communication interfaces being included in the communication interface group 105 comprise a physical network interface and a device driver that corresponds with the physical network interface and a dialup function or other network control function (NCU) and a base protocol stack (TCP/UDP/IP) and so forth.

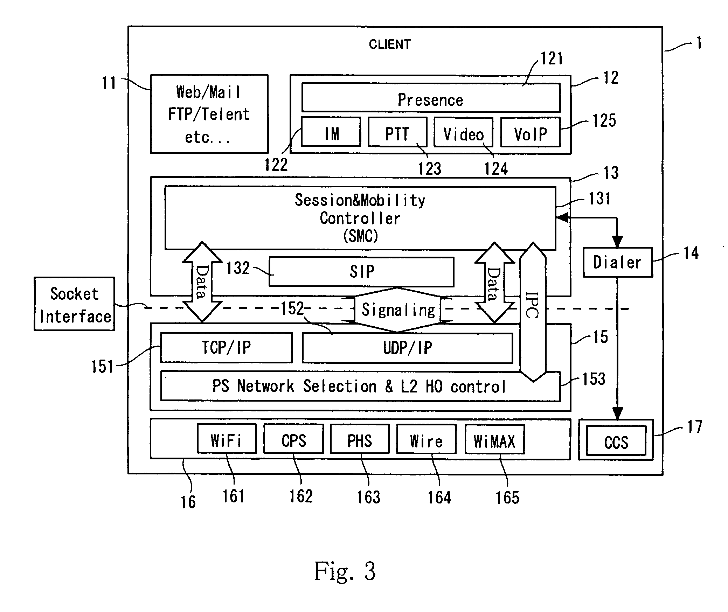

Fig. 3 is a block diagram of a specific software configuration of a mobile terminal of the present invention. Software corresponding with an application unit 11 includes a TCP-based client application (sometimes simply 'TCP application' hereinbelow) 11 and a UDP-based client application (sometimes simply 'UDP application' hereinbelow) 12. The UDP application 12 includes presence software 121, IM (Instant Messaging) software 122, PTT (Push To Talk) software 123, Video software 124, and VoIP (Voice Over Internet Protocol) software 125, and real-time communications are implemented.

Middleware 13 includes a session mobility controller (sometimes simply 'SMS' hereinbelow) 131 and an SIP processing program 132. The SMS 131 is a communication computer program comprising middleware corresponding to the session mobility control unit 102 in Fig. 2. In addition, the SIP processing program 132 corresponds to the call control unit 103. A dialer 14 capable of exchanging data with the SMC 131 is provided. The dialer 14 is provided with a CCS (Cellular CS Network) interface 17.

The base software 15, which is the OS (Operating System), includes a TCP/IP processing program 151, a UDP/IP processing program 152, and an interface selection and handover control program 153. The interface selection and handover control program 153 correspond to the interface selection control unit 104. A communication interface 16 includes a WiFi interface 161, a CPS (Cellular PS Network) interface 162, a PHS interface 163, a Wire interface 164, and a WiMAX interface 165, or the like.

In a software configuration of this kind, the SMC 131 is provided between the application 11, the TCP/IP processing program 151, and the UDP/IP processing program 152. Furthermore, the SMC 131 executes a exchange of data between the TCP/IP processing program 151 and the UDP/IP processing program 152. The exchange of data is executed via a socket interface between the middleware 13 and the base software 15. The SMC 131 executes IPS (Inter-Process Communication) with the interface selection and handover control program 153. The SIP processing program 132 utilizes the UDP/IP processing program 152 to execute a exchange of signaling with a communication partner.

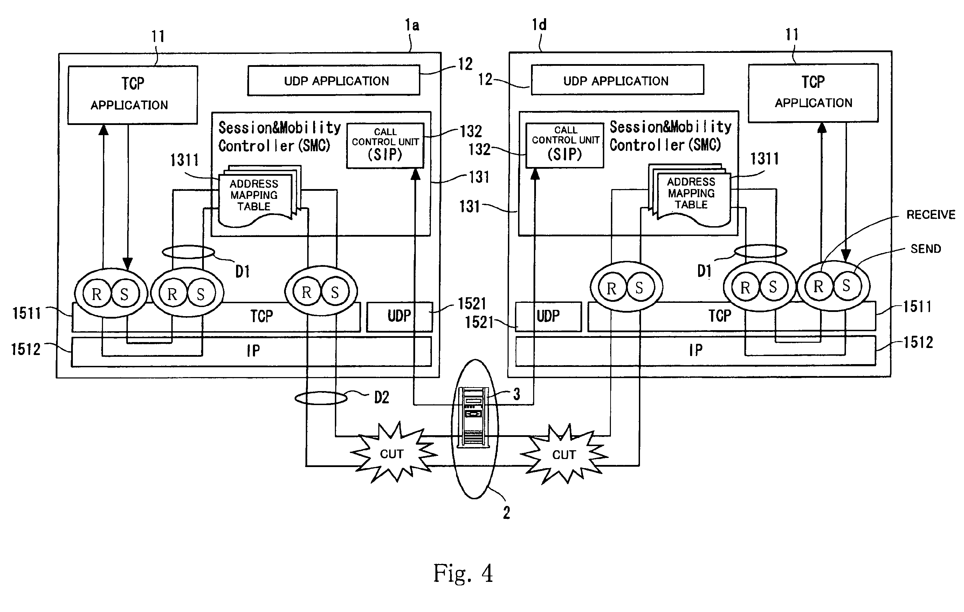

An ALG (Application Level Gateway) systemwill be described next by using Fig. 4 as an example of a connection system for implementing a communication method of the present invention. Fig. 4 shows a case where a communication is performed via various communication networks including the packet-switched network 2 with the mobile terminal 1a, which functions as the client, and a mobile terminal 1d, which functions as the server.

The call control unit 132 of the mobile terminal 1a performs signaling which utilizes SIP with the call control device 3 via the UDP processing program 1521 and the IP processing program 1512 and, when a communication with the mobile terminal is started or resumed, executes an exchange of information required to establish a communication session via the call control device 3. The respective TCP applications 11 of the mobile terminals 1a and 1d perform a normal process in a communication with one another without recognizing the respective SMC 131.

In addition, the TCP application 11 such as a web browser of the mobile terminal 1a sends and receives application data D1 to and from the SMC 131 via the TCP processing program 1511 and the IP processing program 1512. Here, it is necessary for the TCP application 11 to make proxy settings for local addresses. The SMC 131 comprises an address mapping table 1311 and executes address conversion or the like between the SIP and URI on the basis of the address mapping table 1311 and communicates with the mobile terminal 1d constituting the communication partner via the TCP processing program 1511 and the IP processing program 1512 or the like. The mobile terminal 1d also executes a process which is the same as that of the mobile terminal 1a.

The local TCP connection in the mobile terminal 1 is not disconnected by a movement. However, in particular when a TCP communication is performed within the SMC 131, the state of communication is cut in switching of communication networks, that is, in process of a handover. The ALG system shown in Fig. 4 can be implemented relatively easily because the SMC 131 can be mounted at the application level. However, the relevant module must be mounted for each application protocol such as HTTP/FTP/POP/Telnet or the like in the SMC 131.

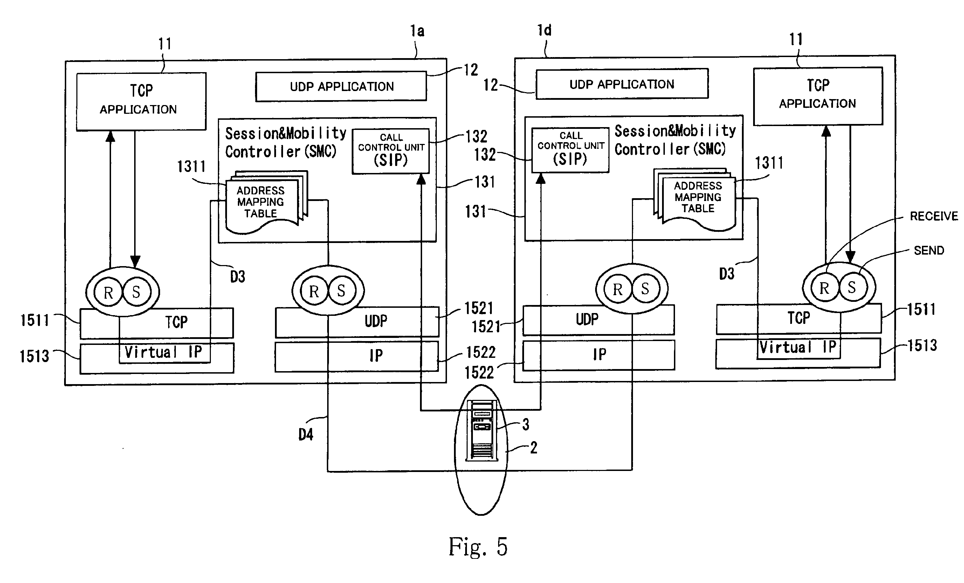

Fig. 5 is an explanatory diagram showing a TCP over UDP system which is another connection system. The call control unit 132 of the mobile terminal 1a performs signaling utilizing SIP with the call control device 3 via the UDP processing program 1521 and the IP processing program 1522 and performs TCP reconnection and retransmission control.

In addition, the TCP application 11 of the mobile terminal 1a sends and receives TCP/IP packet data D3 to and from the SMC 131 via the TCP processing program 1511 and the Virtual IP processing program 1513. Here, the TCP application 11 needs to set up a proxy at a virtual IF address. The SMC 131 includes an address mapping table 1311 and executes address conversion or the like on the basis of this address mapping table 1311 and communicates with the mobile terminal 1d, which is the communication partner, by performing UDP/IP encapsulation on the TCP/IP packet data D3 via the UDP processing program 1521 and IP processing program 1522. Although an external UDP session is established between the mobile terminal 1a and the mobile terminal 1d, an address change in cases where there is movement between communication networks is compatible with SIP mobility. The mobile terminal 1d executes the same processing as the mobile terminal 1a.

The system shown in Fig. 5 has an advantage that there is no need for mounting for each application protocol in the SMC 131.

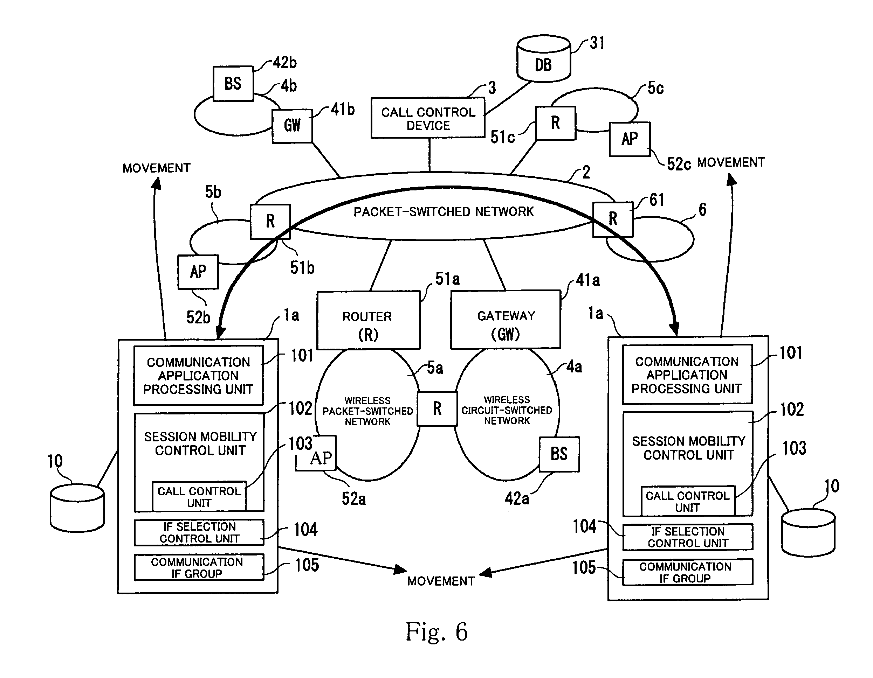

A network connection configuration of the communication system according to the present invention will be described next by using Fig. 6. Each configuration shown in Fig. 6 is the same as that described in Fig. 1 and Fig. 2 and a description of each configuration will therefore be omitted here. In this example, a resource 10 is provided for the mobile terminal 1a and mobile terminal 1d respectively and the mobile terminal 1a and mobile terminal 1d are in a state of communication. The mobile terminal 1a is accommodated within the wireless packet-switched network 5b and the mobile terminal 1d is in state of being accommodated within the IP telephone network 6, but which may move and be accommodated within another communication network.

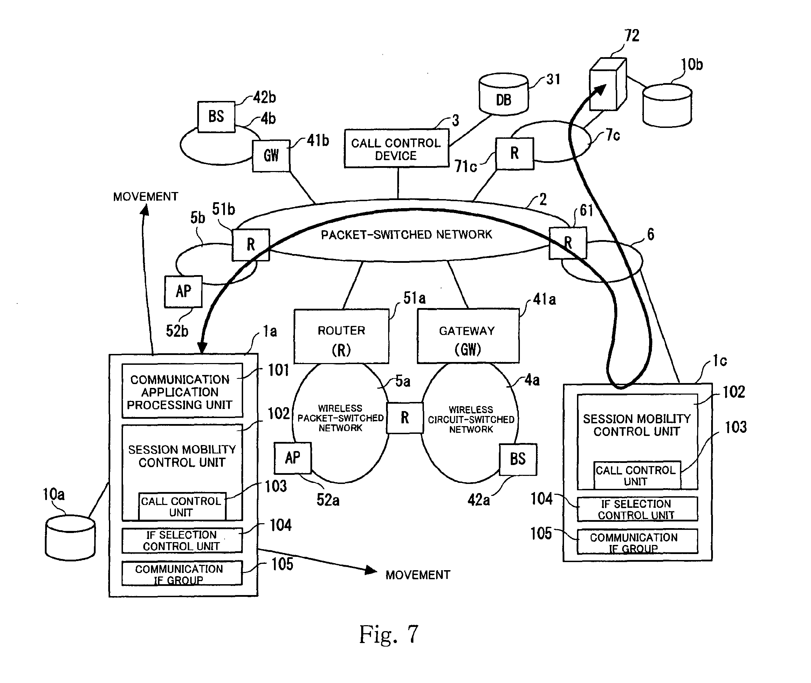

In the network connection configuration shown in Fig. 7, a resource 10a is provided for the mobile terminal 1a and a resource 10b is provided for a web server 72 which is connected to an Internet network 7c that is connected to a packet-switched network 2 via a router 71c. The mobile terminal 1a is in a state of being accommodated within the wireless packet-switched network 5b, but which may move and be accommodated within another communication network. A relay device 1c is accommodated within a wired network 6 connected to the packet-switched network 2 via the router 61. The mobile terminal 1a may communicate with the web server 72 via the relay device 1c and acquire the data of the resource 10b.

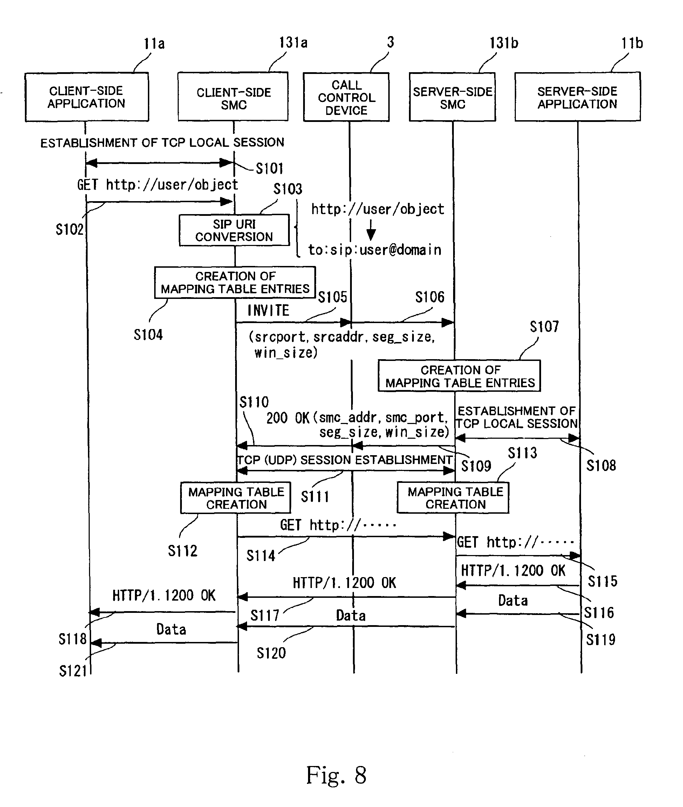

A communication method of the present invention will be described next by using Fig. 8. The sequence diagram of Fig. 8 shows an initial signaling process that is executed at first in the communications between terminals (between a client and a server). In this example, the client acquires the web data from the web server by a web browser.

Initially, the client-side TCP application 11a (here, the web browser) establishes a TCP local session with the client side SMC 131a (S101). Thereafter, the TCP application 11a requests data of a predetermined URL from the SMC 131a (S102).

The call control unit 103a of the SMC 131a converts the received URL to SIP (S103). In addition, the call control unit 103a of the SMC 131a creates a mapping table entry (S104). For example, a TCP connection source address and port and a window size and segment size are written to the mapping table.

The call control unit 103a of the SMC 131a transmits an INVITE message to the call control device 3 (S105). Here, the INVITE message is an SIP connection request, and the INVITE message contains information that is required to establish a communication session for performing communications directly between the SMC 131a and SMC 131b (here, using a web browser) . The information required to establish a communication session includes the TCP connection source address and port, the window size, and the segment size of the client-side SMC 131a.

The call control device 3 transmits the received INVITE message to the server-side SMC 131b installed on the communication-partner mobile terminal 1 (S106). Here, the call control device 3 performs position registration management for each mobile terminal and is therefore able to transmit the INVITE message to the communication-partner mobile terminal 1 via the communication network in which the communication-partner mobile terminal 1 is accommodated, based on the position registration information.

The server side SMC 131b receives the INVITE message and stores at least the information required to establish a communication session (a TCP/UDP session) in the predetermined storage area. The call control unit 103b of the SMC 131b creates a mapping table entry in response to the reception of the INVITE message (S107). In addition, a TCP local session is established between the SMC 131b and the server-side TCP application 11b (S108).

Subsequently, the call control unit 103b of the SMC 131b transmits a response signal that contains the information required to establish a communication session such as the TCP connection source address and port, the window size, and the segment size of the server side SMC 131b to the call control device 3 (S109). The call control device 3 receives a response signal and transmits the same to the client-side SMC 131a (S110) . The client-side SMC 131a receives the response signal and stores at least the information required to establish the communication session in the predetermined storage area.

The TCP or UDP session is established directly between the SMC 131a and the SMC 131b (S111). Thus, the communication method of the present invention initially acquires the information being required to establish the communication session by performing communications between the call control units 103a and 103b of the SMC 131a and 131b respectively via the call control device 3 and, based on the information thus acquired, establishes the communication session directly between the SMC 131a and SMC 131b without the involvement of the call control device 3.

A mapping table is then created for the SMC 131a and SMC 131b respectively (S112 and S113).

The SMC 131a transmits a request signal with the same content as the request signal received from the TCP application 11a in S102 to the SMC 131b (S114) . The SMC 131b transfers this request signal to the TCP application 11b (S115).

In contrast, the TCP application 11b transmits a response signal to the SMC 131b (S116) . The SMC 131b transmits a response signal to the client-side SMC 131a (S117) . The SMC 131a transfers the response signal to the TCP application 11a (S118).

Thereafter, web data corresponding with the request signal are transmitted from the server-side TCP application 11b to the SMC 131b (S119). The SMC 131b transmits the received web data to the client-side SMC 131a (S120). The SMC 131a transfers the received web data to the TCP application 11a (S121).

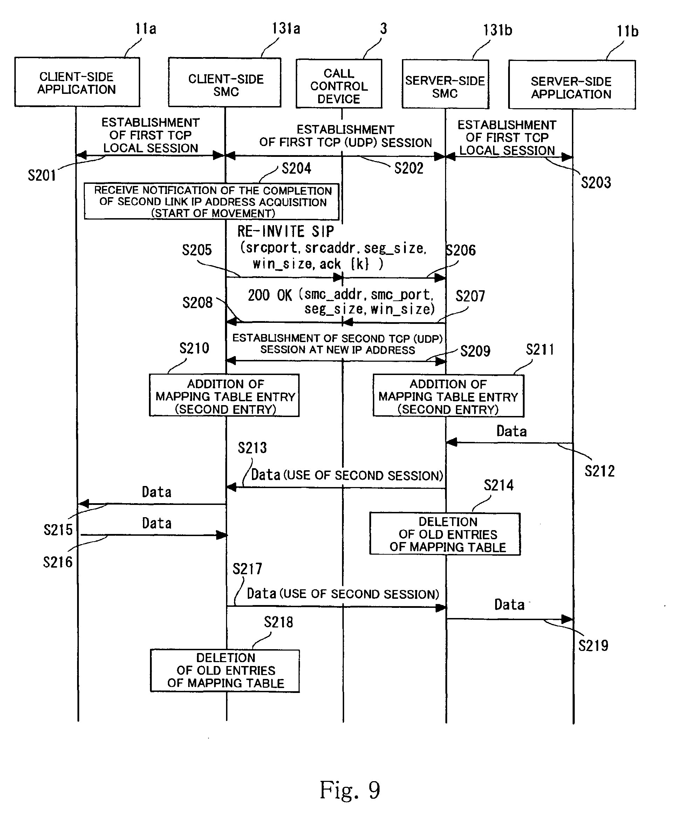

Signaling of handover is described next using Fig. 9. As an initial state, a first TCP local session is established between the client-side TCP application 11a and the client-side SMC 131a (S201), a first TCP or UDP session is established between the SMC 131a and the server-side SMC 131b (S202), and a first TCP local session is established between the SMC 131b and the server-side TCP application 11b (S203).

In such an initial state, it is assumed that the mobile terminal 1 as a client moves and performs handover process and receives notification regarding the completion of the acquisition of a new IP address for implementing a second communication link with another communication network via an interface that is utilized for the connection with the other communication network (S204).

The client-side SMC 131a, in response to the reception of the notification regarding completion of the acquisition of the new IP address, transmits a RE-INVITE SIP signal (reconnection signal) to the call control device 3 to change the communication session to one via a new communication network (S205). Here, the RE-INVITE SIP signal includes the TCP connection source address and port, the window size, the segment size, and the response signal and so forth of the client-side SMC 131a and the communication attributes is changed accordingly. In this example, the IP address is changed to a newly assigned IP address. The call control device 3 receives this signal and transfers same to the server side SMC 131b (S206).

The server-side SMC 131b receives the RE-INVITE SIP signal, and identifies the new communication attributes contained in the RE-INVITE SIP signal (the changed new IP address here), and transmits the response signal based on the new communication attributes to the call control device 3 (S207). The response signal contains the TCP connection source address and port, the window size, and the segment size and so forth of the server-side SMC 131b. The call control device 3 receives this response signal and transfers the response signal to the client-side SMC 131a (S208). Thus, a second TCP (UDP) session using a new IP address is established between the client-side SMC 131a and server-side SMC 131b (S209).

Each of the SMC 131a and 131b add mapping table entries in accordance with the establishment of the second TCP (UDP) session (S210, S211). Thereafter, web data are transmitted from the server-side TCP application 11b to the SMC 131b (S212).

Here, the TCP applications 11a and 11b recognize the state in which the first TCP local session was established merely as a remote session, so that they do not recognize processes that are carried out between the SMC 131.

The SMC 131b directly transmits web data to the client-side SMC 131a without involvement of the call control device 3 by utilizing the second TCP (UDP) session (S213). The server-side SMC 131b deletes the old entries in the mapping table (S214).

The client-side SMC 131a transmits the received web data to the TCP application 11a (S215). The client-side TCP application 11a receives the web data and performs predetermined processing.

In cases where data are transmitted from the client-side TCP application 11a (S216), the client-side SMC 131a receives the data. The client-side SMC 131a utilizes the second TCP (UDP) session to transmit the data to the server-side SMC 131b (S217) . The client-side SMC 131a deletes the old entries in the mapping table (S218).

The server-side SMC 131b transmits the received data to the TCP application 11b (S219) . The server-side TCP application 11b receives the data and performs predetermined process.

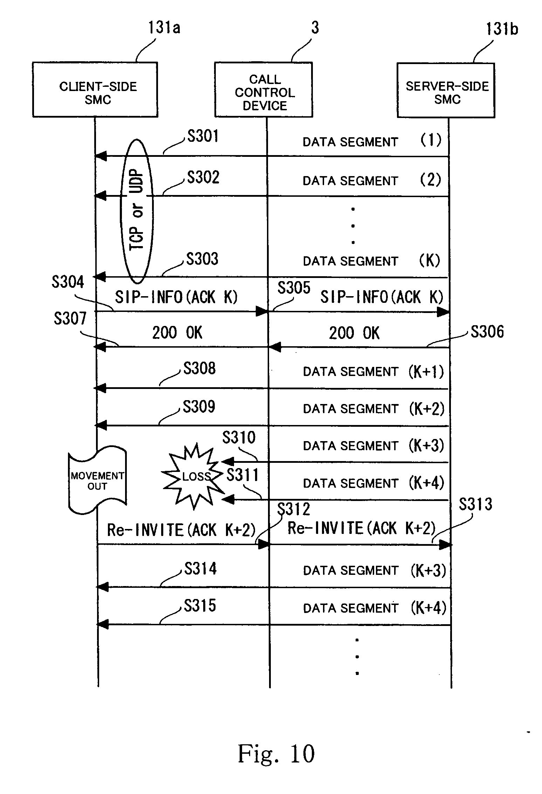

By using the sequence diagram shown in Fig. 10, data transfer process being performed when a mobile terminal moves and communication is cut while a data communication is performed between the SMC is described. TCP communications are essentially reliable. However, when it gets to the stage where communication is cut due to the movement of the mobile terminal, data segments not yet transmitted and data segments transmitted normally are stored in a mixed state in the TCP transmission buffer and it is not possible to judge what measure of data segments are transmitted normally by the SMC. Hence, an inconvenience arises where retransmission also includes normally transmitted data segments and, as a result, there are cases where the data ultimately received by the TCP application differs from the originally transmitted data (that is, the data amount increases and decreases). In addition, although, in the case of communications which use SMC, the data of the SMC transmission buffer are transferred to the TCP transmission buffer and transmitted to the communication partner, when the occurrence of retransmission is considered, data transferred to the TCP transmission buffer should not be discarded at the same time as the transfer from the SMC transmission buffer. However, the storage of all of the previous data in the SMC transmission buffer is problematic because the storage area assigned to the SMC transmission buffer is preferably as small as possible. The present invention solves this problem by means of the communication method illustrated below.

The data segments (1), (2), ··· (K) each comprising 1024 bytes, for example, are continuously transmitted by means of TCP or UDP to the client-side SMC 131a from the server-side SMC 131b without the involvement of the call control device 3 (S301 to S303) . The segment size determining the data amount contained in the data segment can be designated by the initial signaling described in Fig. 8.

Receiving the data segments (1) to (K), the client-side SMC 131a includes information representing data segment (K) which is successfully received last in a SIP-INFO signal, and then transmits this SIP-INFO signal to the call control device 3 (S304) . Here, in cases where data segments of a predetermined window size number are received, the client-side SMC 131a transmits the SIP-INFO signal containing an ACK signal (signal indicating the normal reception of data) . The call control device 3 receives the SIP-INFO signal and transfers same to the server-side SMC 131b (S305) . The window size can be designated by the signaling illustrated in Fig. 8 and Fig. 9.

The server-side SMC 131b is able to receive the transferred SIP-INFO signal and recognize the last data segment (K) received by the client-side SMC 131a and discard the data segments (1) to (K) stored in the server-side transmission buffer. The server-side SMC 131b transmits the response signal to the call control device 3 after discarding the data segments (1) to (K) (S306) . The call control device 3 receives the response signal and transfers the response signal to the client-side SMC 131a (S307). The client-side SMC 131a receives the response signal.

Thereafter, the server-side SMC 131b restarts the data transmission and transmits the data segments (K+1) and (K+2) (S308 and S309). Suppose that, thereafter, the server-side SMC 131b assumes a state where communications are cut due to the movement of the mobile terminal 1 such that the transmission of the data segments (K+3) and (K+4) is cut in midstream through (S310 and S311) . In this case, the client-side SMC 131a includes information representing the data segment (K+2), which is successfully received last, in the Re-INVITE signal which is a reconnection signal in addition to a new IP address that is newly assigned by the movement-destination communication network and transmits the Re-INVITE signal to the call control device 3 (S312). The call control device 3 receives the Re-INVITE signal and transfers the Re-INVITE signal to the server-side SMC 131b (S313).

The server-side SMC 131b is able to receive the Re-INVITE signal and recognize that transmission has been normal up to and including data segment (K+2) and discard the data segments (K+1) and (K+2) stored in the transmission buffer. Further, the server-side SMC 131b restarts the data transmission and transmits the data segments (K+3) and (K+4) (S314 and S315) .

Thus, with the communication method shown in Fig. 10, in cases where it is judged that the reception-side SMC 131 has received data of a predetermined amount, information identifying data that was successfully received last is transmitted to the transmission-side SMC 131. Hence, the transmission-side SMC 131 is able to discard data up to and including the data successfully transmitted from the transmission buffer. In addition, because information identifying the data that was successfully received last is transmitted from the reception-side SMC 131 to the transmission-side SMC 131 at the time of reconnection, the transmission-side SMC 131 is able to transmit the data which is to be transmitted following the data which has been successfully transmitted. Although the example shown in Fig. 10 is constituted to manage the data segment number, the embodiment is not limited to this example. Data amount-related information such as the number of bytes may also be managed.

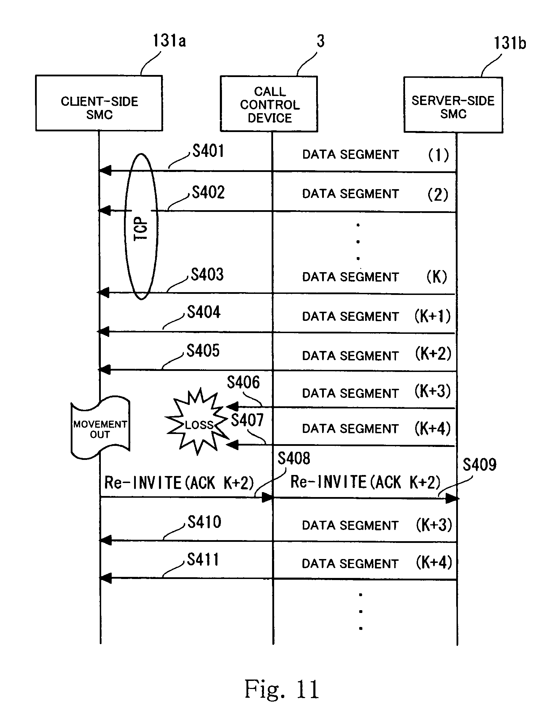

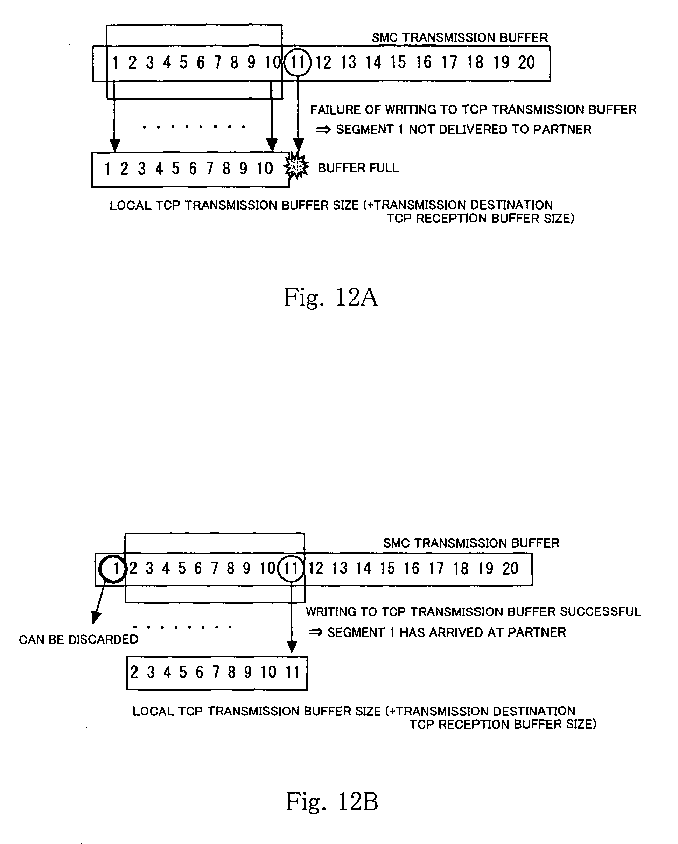

A communication method that solves the same problem by means of a system that is different from the communication method shown in Fig. 10 is illustrated subsequently by using the sequence diagram of Fig. 11 and the explanatory diagrams of Fig. 12A and Fig. 12B.

As shown in Fig. 11, the data segments (1), (2) ··· (K+2) are continuously transmitted by means of TCP to the client-side SMC 131a from the server-side SMC 131b without the involvement of the call control device 3 (S401 to S405). Although the client-side SMC 131a receives the data segments (1) to (K+2), the ACK signal is not transmitted to the server-side SMC 131b.

Here, the data segments in the transmission buffer are sequentially discarded in accordance with a predetermined algorithm. In Fig. 12A, the data segments (1) to (20) are stored in the transmission buffer of the server-side SMC 131b (simply 'SMC transmission buffer' hereinbelow). Of these data segments (1) to (20), the data segments (1) to (10) are written to the transmission buffer on the transport layer prescribed by TCP (simply 'TCP transmission buffer' hereinbelow). In a case where the data segments stored in the TCP transmission buffer are normally transmitted and a TCP ACK signal is received from the partner which transmitted this signal, the data segments that have been transmitted normally are deleted from the TCP transmission buffer.

In such a state, even when the data segment (11) is about to be written from the SMC transmission buffer to the TCP transmission buffer, because the TCP transmission buffer is already in a full state, writing thereto fails. When writing from the SMC transmission buffer to the TCP transmission buffer fails, the SMC 131b grasps the fact that the capacity of the TCP transmission buffer is equivalent to 10 data segments . Hence, the SMC 131b recognizes that data segments up to the data segment 10 including the data segment 1 initially written from the TCP transmission buffer have not yet been transmitted normally to the client-side SMC 131a. In this case, the SMC 131b does not discard the data segments (1) to (10) stored in the SMC transmission buffer because of the possibility of retransmission. Here, in cases where it is not guaranteed that the client-side SMC is able to acquire all of the segments arriving at the client-side TCP reception buffer, there is the possibility that the segments in the client-side TCP reception buffer are also the subject of a retransmission request. In this case, when the client-side TCP reception buffer capacity is equivalent to five segments, for example, a solution can be found by adding ten data segments' worth of the server-side TCP transmission buffer capacity and considering the retransmission request target to be equivalent to fifteen segments. In this case, the first segment arrives reliably at the client-side SMC at the point where the sixteenth segment has been written. The client-side TCP reception buffer size can be reported by means of the signaling shown in Fig. 8 and Fig. 9.

However, as illustrated by Fig. 12B, it can be recognized that, in cases where the SMC 131b has been able to write the data segment (11) to the TCP transmission buffer from the SMC transmission buffer, space is generated in the TCP transmission buffer in an amount equivalent to the data segment (11), that is, the data segment (1), which is of the same data amount as the space, has already been transmitted normally to the client-side SMC 131a. In this case, the SMC 131b is able to discard the normally transmitted data segment (1) from the SMC transmission buffer.

It is possible to confirm whether normal transmission has taken place by means of such a system because the deletion of data from the TCP transmission buffer is regulated as a result of the TCP (transmissionbuffer) judgingthatnormaltransmission is complete for the first time upon receiving the ACK from the data transmission destination. That is, this system can be applied to a transmission buffer that is controlled to receive a signal indicating normal reception from the transmission destination and delete data.

Thereafter, the server-side SMC 131b restarts the data transmission and transmits the data segments (K+3) and (K+4) (S406 and S407). However, suppose that, the server side SMC 131b assumes a state where communications are cut due to the movement of the mobile terminal 1 such that the transmission of the data segments (K+3) and (K+4) is cut midway through (S406 and S407). In this case, the client-side SMC 131a includes information representing the data segment (K+2), which is successfully received last, in the Re-INVITE signal constituting a reconnection signal in addition to a new IP address that is newly assigned by the movement-destination communication network and transmits the Re-INVITE signal to the call control device 3 (S408) . The call control device 3 receives the Re-INVITE signal and transfers the Re-INVITE signal to the server-side SMC 131b (S409).

The server-side SMC 131b receives the Re-INVITE signal and recognizes that transmission has been normal up to and including the data segment (K+2), restarts the data transmission, and transmits the data segments (K+3) and (K+4) that are to be transmitted after the data segment (K+2) (S410 and S411) .

Thus, with the communication method shown in Fig. 11, because it is judged whether data transmission has been successful based on whether it has been possible to write data to the TCP transmission buffer, the transmission-side SMC 131 is able to discard data up to and including the data which have been successfully transmitted from the transmission buffer. In addition, because information identifying the data which have been successfully transmitted last is transmitted from the reception-side SMC 131 to the transmission-side SMC 131 during reconnection, the transmission-side SMC 131 is able to transmit data which are to be transmitted after the data which have been successfully transmitted.

### INDUSTRIAL APPLICABILITY

The present invention can be utilized in a mobile terminal capable of wireless communication in a plurality of communication networks and is suited to increasing the continuity of connection-type communications and maintaining the communication quality of real-time communications.

## Claims

1. A mobile terminal capable of wireless communication in a plurality of communication networks, comprising:
a controller that exchanges information required to establish a communication session for performing communications with a communication partner; and
communication means for establishing the communication session on the basis of the required information that has been exchanged, and executing communications with the communication partner through the established communication session,
wherein the controller acquires the required information by executing call control with the communication partner via a call control device.

2. The mobile terminal according to claim 1, wherein the controller establishes a local session with a communication application in accordance with a request by the communication application.

3. The mobile terminal according to claim 1, wherein the controller executes information exchange when performing handover and shifts to a new communication session.

4. The mobile terminal according to claim 1, wherein the controller transmits a signal indicating that data have been received normally from the communication partner to the communication partner.

5. The mobile terminal according to any of claims 1 to 4, wherein the controller transmits information specifying data that have been received normally to the communication partner in cases where the communication session with the communication partner is disconnected.

6. The mobile terminal according to claim 1, wherein the controller judges the existence of data that have been transmitted normally based on whether it has been possible to write data from a transmission buffer on the controller to a transmission buffer that is controlled to receive a signal indicating normal reception from the transmission destination and to delete data and, discards the data from the transmission buffer on the controller in cases where judgment is made that there are normally transmitted data.

7. The mobile terminal according to any of claims 1 to 6, wherein the controller of the mobile terminal exchanges information required to establish the communication session with the controller of the communication partner and executes communications through the established communication session.

8. A method of communicating between a first mobile terminal and a second mobile terminal capable of wireless communication in a plurality of communication networks,
the method comprising:
an information exchange step of exchanging, via a call control device, information required to establish a communication session for performing communications between the first mobile terminal and the second mobile terminal;
a session establishment step of establishing the communication session on the basis of the required information that has been exchanged; and
a communication execution step of executing communications, not through the call control device, between the first mobile terminal and the second mobile terminal by means of the established communication session.

9. The communication method according to claim 8, wherein the information exchange step is executed by a controller that establishes a local session with a communication application in accordance with a request by the communication application.

10. The communication method according to claim 8, wherein the information exchange step is executed when performing handover, and a shift to a new communication session is executed.

11. The communication method according to claim 8, further comprising:
a step in which the first mobile terminal transmits to the second mobile terminal a signal indicating normal reception from the second mobile terminal; and
a step in which the second mobile terminal discards data of the transmission buffer in accordance with the signal indicating normal reception.

12. The communication method according to any of claims 8 to 11, further comprising:
a step in which the first mobile terminal transmits information specifying data that have been received normally to the second mobile terminal in cases where the communication session is disconnected; and
a step in which the second mobile terminal discards data of the transmission buffer on the basis of information specifying the data that have been received normally.

13. The communication method according to claim 8, further comprising a step of judging the existence of normally transmitted data based on whether it has been possible to write data from a transmission buffer on the controller to a transmission buffer that is controlled to receive a signal indicating normal reception from the transmission destination and to delete data, and of discarding the data from the transmission buffer on the controller in cases where judgment is made that there are normally transmitted data.

14. The communication method according to any of claims 8 to 13, wherein the information exchange step, the session establishment step, and the communication execution step are executed between the controller of the first mobile terminal and the controller of the second mobile terminal.
